(19) Europäisches Patentamt
European Patent Office
Office européen des brevets

(11) **EP 1 085 267 B1**

(12) **EUROPÄISCHE PATENTSCHRIFT**

(45) Veröffentlichungstag und Bekanntmachung des Hinweises auf die Patenterteilung:
**19.03.2008  Patentblatt 2008/12**

(51) Int Cl.:
*F23R 3/34* *(2006.01)*     *F02C 9/22* *(2006.01)*
*F02C 9/28* *(2006.01)*

(21) Anmeldenummer: **00810803.7**

(22) Anmeldetag: **06.09.2000**

(54) **Steuerung von Primärmassnahmen zur Reduktion der thermischen Stickoxidbildung in Gasturbinen**

Control of primary measures for the reduction of NOx in gas turbines

Régulation des mesures primaires pour la réduction des oxydes d'azote dans des turbines à gaz

(84) Benannte Vertragsstaaten:
**DE GB**

(30) Priorität: **20.09.1999  DE 19944922**

(43) Veröffentlichungstag der Anmeldung:
**21.03.2001  Patentblatt 2001/12**

(73) Patentinhaber: **Alstom Technology Ltd**
**5400 Baden (CH)**

(72) Erfinder:
• **Burkard, Moritz**
**5242 Birr (CH)**
• **Dittmann, Rolf, Dr.**
**5414 Nussbaumen (CH)**
• **Morgenthaler, Klaus**
**5102 Rupperswil (CH)**
• **Schneider, Anton**
**5430 Wettingen (CH)**

(56) Entgegenhaltungen:
| | |
|---|---|
| **EP-A- 0 427 952** | **EP-A- 0 509 496** |
| **EP-A- 0 571 782** | **EP-A- 0 691 511** |
| **EP-A- 0 742 356** | **DE-A- 2 416 909** |
| **US-A- 4 529 887** | **US-A- 4 733 527** |
| **US-A- 5 896 736** | **US-A- 5 937 634** |

## Beschreibung

### Technisches Gebiet

Die vorliegende Erfindung betrifft ein Verfahren zur Steuerung von Primärmassnahmen zur Reduktion der thermischen Stickoxidbildung in Gasturbinen, wobei die Primärmassnahmen nach einer Kenngrösse gesteuert werden, welche Kenngrösse eine luftmengenspezifische Wärmefreisetzungsrate in einer Brennkammer einer Gasturbine charakterisiert. Insbesondere betrifft sie ein Verfahren zur Steuerung der Brennstoffverteilung auf Brenner oder Brennergruppen einer Gasturbine, und zur Steuerung der Menge von zur Stickoxidminderung in die Brennkammer einer Gasturbine eingebrachtem Dampf oder Wasser.

### Stand der Technik

Aus früheren Offenbarungen wie beispielsweise der EP 0 321 809 sind Vormischbrenner bekannt geworden, mit denen sich ohne weitere Massnahmen durch eine magere vorgemischte Verbrennung sehr geringe Schadstoff-, insbesondere Stickoxid-, -beladung des Abgases realisieren lässt.

Brenner der Bauart, wie sie in der oben genannten Schrift angegeben werden, haben sich in der Praxis in grossen Stückzahlen in Gasturbinen bewährt.

Die genannten Brenner reagieren sehr sensibel auf Veränderungen der Stöchiometrie eines einzelnen Brenners: Wird ein Brenner mit fettem Gemisch betrieben, steigen die Emissionen überproportional an. Bei einem brennstoffarmen Betrieb wird die Flamme zusehends instabil. In der Tat werden diese Brenner in modernen Gasturbinen schon recht nahe an ihrer Stabilitäts- respektive Löschgrenze betrieben. Die gesamte Stöchiometrie einer Gasturbine aber variiert über den gesamten Betriebsbereich in weiten Grenzen.

Daher werden Gasturbinen mit einer Vielzahl von Brennern ausgestattet, deren Brennstoffzufuhr einzeln oder in Gruppen gesteuert werden kann. Damit wird bei variabler Stöchiometrie der gesamten Maschine die Stöchiometrie der Brenner innerhalb der Betriebsgrenzen gehalten. Als nach aussen sich manifestierendes Mass für die Brennerstöchiometrie werden die Stickoxidemissionen herangezogen, welche wohl auch von einer Reihe anderer Faktoren abhängen, aber dennoch einen guten Anhaltspunkt für die Flammentemperaturen liefern, und letztlich auch eine Grösse darstellen, die eben mittels der beschriebenen Brennertechnologie unterhalb eines Grenzwertes zu halten ist.

Um bei insgesamt stark variabler Maschinenstöchiometrie die Brenner in einem zulässigen Intervall der Stöchiometrie zu halten, werden im wesentlichen zwei Ansätze verfolgt. Bei einer Variante ist die Zuleitung jeden Brenners mit einem Absperrorgan versehen. Im Teillastbereich der Gasturbine ist nur ein Teil dieser Absperrorgane geöffnet, und nur ein Teil der Brenner wird betrieben. Bei Erhöhung der Last wird mehr Brennstoff zugeführt, was bei gleichbleibender Luftmenge eine heissere Flamme bedeutet. Es ein Punkt erreicht, bei dem der Betrieb eines weiteren Brenners möglich oder - aufgrund einer Überschreitung zulässiger Emissionen - nötig ist. Durch Öffnen des Absperrorgans in der Brennstoffzuleitung eines weiteren Brenners wird die gesamte Brennstoffmenge auf eine grössere Anzahl von Brennern verteilt, und somit wird jeder Einzelbrenner wieder magerer, also mit einer kühleren Flamme und geringeren Stickoxidemissionen, betrieben.

Eine weitere Methode besteht darin, jeweils mehrere Brenner in Gruppen zusammenzufassen. So kann eine Anzahl von Brennern in zwei Gruppen zusammengefasst werden, von denen die erste beispielsweise fünf oder drei mal so viele Brenner umfasst wie die zweite. Alle Brenner jeder dieser Gruppen sind an eine gemeinsame Brennstoffleitung angeschlossen, in welcher Brennstoffleitung jeweils ein Regelorgan angeordnet ist. Im untersten Lastbereich, das heisst bei den geringsten Brennstoffmengen, ist die erste Brennergruppe in Betrieb, und das Regelorgan der zweiten Brennergruppe ist vollständig geschlossen. Gegebenenfalls wird die Flammenstabilität zusätzlich durch eine Anzahl Diffusionsbrenner unterstützt. Mit zunehmender Brennstoffmenge können die Diffusionsbrenner ausser Betrieb genommen werden. Mit zunehmender Brennstoffmenge werden die Brenner der ersten Brennergruppe mit immer fetterem Gemisch betrieben. Sukzessive wird dann das Regelorgan in der Brennstoffleitung der zweiten Brennergruppe geöffnet, und ein Teil des Brennstoffs zu den Brennern der zweiten Gruppe geleitet.

Eine weitere Möglichkeit zur Verminderung der Bildung von Stickoxiden bietet die Einbringung inerter Medien, vorzugsweise Wasser oder Dampf, in die Flamme oder die Flammen im Inneren einer Gasturbinenbrennkammer. Dabei wird die Wasser- oder Dampfmenge in Abhängigkeit von einer Kontrollgrösse so gesteuert, dass sie ein bestimmtes, in Abhängigkeit von der Kontrollgrösse vorgegebenen, Verhältnis zur Brennstoffmenge aufweist.

Unabhängig davon, wie die Steuerung der Brennstoffverteilung oder der Wasser- und Dampfeinspritzung ausgeführt ist, muss eine sinnvolle Grösse zur Steuerung oder Regelung der Brennstoffverteilung oder der Wasser- und Dampfeinspritzung herangezogen werden. Eine Regelung, beispielsweise anhand gemessener Emissionsdaten, erweist sich in transienten Betriebszuständen als problematisch. Der Einsatz von Emissionsmessungen mit der geforderten hohen Genauigkeit und Zuverlässigkeit über eine lange Zeit erfordert daneben eine regelmässige qualifizierte Wartung. So wird in der Praxis eine Maschinenkenngrösse als Parameter zur Steuerung der Brennstoffverteilung herangezogen. In Versuchsreihen wird ein geeigneter Verlauf der Brennstoffversorgung in Abhängigkeit von dieser Grösse ermittelt, und in die Steuerung der Maschine einprogrammiert. Somit reagiert die Brennersteuerung unmittelbar auf Veränderungen des Steuerungsparameters.

Ein solcher Parameter muss möglichst genau das Brennstoff-Luft-Verhältnis oder eine luftmassenspezifische Wärmefreisetzungsrate der Maschine wiedergeben, gegebenenfalls noch mit einigen anderen Grössen gewichtet, welche die Flammenstabilität und die Stickoxidbildung beeinhalten.

Ein zunächst sinnvoller Steuerungsparameter ist die relative Leistung einer Gasturbine, welche einerseits die Leistung der Gasturbine berücksichtigt, andererseits auch Veränderungen der Luftmenge aufgrund variabler Umgebungsbedingungen. Es zeigt sich jedoch, dass die relative Last in viel höherem Ausmasse eine Prozess- als eine Verbrennungsgrösse darstellt. Aufgrund einer Vielzahl von Faktoren wird insbesondere eine Veränderung der Umgebungstemperatur überkompensiert. Weiterhin ist bei Maschinen, die über verstellbare Leitreihen am Verdichtereintritt verfügen, die Luftmenge in hohem Ausmasse von der Stellung insbesondere einer Vorleitreihe abhängig. Gerade in Kombianlagen aber wird diese in Abhängigkeit von bestimmten Prozesstemperaturen verstellt. Die Stellung der Vorleitreihe und somit die Luftmenge der Verbrennung kann daher bei ein und der selben Relativlast bei unterschiedlichen Umgebungstemperaturen erheblich variieren.

Mit den Anforderungen an Wirtschaftlichkeit und Umweltverträglichkeit, die zwingend an die Energieversorgung der Zukunft zu stellen sind, wird der zulässige Betriebsbereich, in dem die Brenner eine Einhaltung der Emissionsvorschriften bei hinreichendem Abstand von der Betriebsgrenze gewährleisten, immer enger, und derartige Toleranzen können immer weniger hingenommen werden. Auch für andere Primärmassnahmen, die zur Reduktion der thermischen Stickoxidbildung getroffen werden, gilt die Aussage, dass der Betriebsbereich, der von gesetzlichen, technischen und wirtschaftlichen Grenzen vorgegeben wird, zusehends eingeschränkt wird.

Die EP 509 496 offenbart ein Verfahren, bei dem die Leistung einer Gasturbogruppe bestimmt wird, und aus der Leistung ein Brennstoffmassenstrom berechnet wird. Davon ausgehend wird ein Brennstoff Luft-Verhältnis bestimmt. Dieses Brennstoff-Luft-Verhältnis wird mit einem stabilen Betriebsbereich in einem Kennfeld verglichen, welches abhängig von der Leistung, der Luftfeuchtiakeit, und der Lufttemperatur bestimmt wird. Es wird dabei festgestellt, ob das Brennstoff-Luft-Verhältnis einerseits in einem stabilen Betriebsbereich liegt, und andererseits in einem Bereich, in dem die Stickoxidemissionen sich ebenfalls in einem zulässigen Bereich bewegen. Gegebenenfalls wird durch geeignete Eingriffe, insbesondere auf die Luftverteilung, das Brennstoff-Luft-Verhältnis so verstellt, dass es innerhalb des Kennfeldes im zulässigen Bereich liegt.

## Darstellung der Erfindung

Die Erfindung hat sich zum Ziel gesetzt, ein Verfahren zur Steuerung von Primärmassnahmen zur Reduktion der thermischen Stickoxidbildung in Gasturbinen anzugeben, wobei die Primärmassnahmen nach einer Kenngrösse gesteuert werden, welche Kenngrösse eine luftmengenspezifische Wärmefreisetzungsrate in einer Brennkammer der Gasturbine charakterisiert. Bei der Bildung dieser Grösse soll auf Daten zurückgegriffen werden, die zuverlässig und möglichst ohne Zeitverzug zur Verfügung stehen.

Erfindungsgemäss wird dies erreicht, indem zur näherungsweisen Bestimmung der Wärmefreisetzungsrate die an einem abtriebseitigen Ende einer Nutzleistungswelle der Gasturbine zur Verfügung stehende Leistung herangezogen wird, und die Luftmenge in Abhängigkeit von Umgebungsbedingungen und Maschinen-Betriebsdaten bestimmt wird. Die Nutzleistung wird mit einem Term korrigiert, der das Druckverhältnis der Gasturbine beinhaltet. Ein solcher Term muss einerseits berücksichtigen dass mit steigendem Druckverhältnis der ideale Prozesswirkungsgrad steigt, das Verhältnis der Generatorleistung und der Wärmefreisetzungsrate in der Brennkammer sich also ändert. Ein weiterer Punkt, den ein solcher Term mit Vorteil berücksichtigt, ist die Veränderung der Komponentenwirkungsgrade, insbesondere des Verdichterwirkungsgrades, bei unterschiedlichem Druckverhältnis. Die Verdichterendtemperatur, die ebenfalls in hohem Masse vom Druckverhältnis abhängt, beeinflusst die Stickoxidbildung wie auch die Flammenstabilität. Ebenso verändert sich mit dem Druckverhältnis auch die Verteilung von Kühlluft und Verbrennungsluft in einem gewissen Rahmen. Aufgrund der komplexen Zusammenhänge ist der druckabhängige Korrekturterm teilempirisch zu bestimmen oder an die spezifischen Bedingungen einer Maschine anzupassen. Bei den Umgebungsbedingungen ist insbesondere die Verdichtereintrittstemperatur und der Umgebungsluftdruck zu berücksichtigen, die die Dichte der vom Verdichter angesaugten Luft bestimmen. Daneben kann auch die Luftfeuchte eine Rolle spielen. Was die Machinen-Betriebsdaten angeht, ist in allererster Linie an die Stellung verstellbarer Verdichterleitreihen, und ganz besonders einer verstellbaren Vorleitreihe, zu denken, welche Faktoren den Ansaugvolumenstrom eines Verdichters in sehr hohem Ausmasse beeinflussen.

Unter den Primärmassnahmen zur Reduktion der thermischen Stickoxidbildung ist in diesem Zusammenhang in erster Linie an die Aufteilung der Brennstoffmenge an unterschiedliche Vormischbrenner oder Gruppen von Vormischbrennern zu denken, oder an die Steuerung der Menge an inerten Medien, beispielsweise Dampf oder Wasser, die zur Reduktion der

Flammentemperatur in eine Brennkammer eingespritzt wird. Daneben ist selbstverständlich noch eine Reihe weiterer Methoden zur Reduktion der thermischen Stickoxidbildung denkbar, die mittels des erfindungsgemässen Verfahrens gesteuert werden können.

Vorteilhaft ist es weiterhin, die Veränderung des Luftmassenstroms in Abhängigkeit von der Stellung der Verdichterleitreihen, insbesondere der Vorleitreihe, zu berücksichtigen.

Um die Kenngrösse praktisch nutzen zu können, ist es nicht notwendig, diese quantitativ exakt zu bestimmen. Im Gegenteil ist es ausreichend, ausgehend von einem bestimmten Bezugspunkt die relativen Veränderungen in Abhängigkeit von den zitierten Maschinen- und Umgebungsdaten richtig wiederzugeben.

Selbstverständlich ist es auch ohne weiteres möglich, die so ermittelte Kenngrösse zur eingangs kurz beschriebenen Steuerung der Wasser- oder Dampfeinspritzung in die Brennkammer einer Gasturbine heranzuziehen.

**Kurze Beschreibung der Zeichnung**

Die Erfindung wird nachfolgend anhand der Zeichnung näher erläutert. Im Einzelnen zeigen

- Fig. 1 eine vereinfachte Darstellung einer Gasturbine mit Wasser- oder Dampfeinspritzung zur Reduktion der thermischen Stickoxidbildung;
- Fig. 2 eine vereinfachte Darstellung einer Gasturbine mit einer Ringbrennkammer und zwei Gruppen von Vormischbrennern zur Reduktion der Bildung von thermischen Stickoxiden;
- Fig. 3 einen Ausschnitt einer Ringbrennkammer einer Gasturbine, welche mit Vormischbrennern ausgestattet ist, sowie die zugehörige Brennstoffversorgung inklusive der Organe zur Steuerung der Brennstoffverteilung auf verschiedene Brennergruppen;
- Fig. 4 Stickoxidmesswerte einer solchen Maschine, die bei unterschiedlichen Umgebungstemperaturen aufgenommen wurden, über der Relativleistung der Maschine aufgetragen;
- Fig. 5 die gleichen Messwerte wie in Fig. 4 über der erfindungsgemässen Steuergrösse aufgetragen.

Das in den Zeichnungen erläuterte Ausführungsbeispiel ist lediglich in einem instruktiven Sinne zu verstehen, und soll nicht zu einer Einschränkung des in den Ansprüchen gekennzeichneten Schutzumfangs herangezogen werden.

**Weg zur Ausführung der Erfindung**

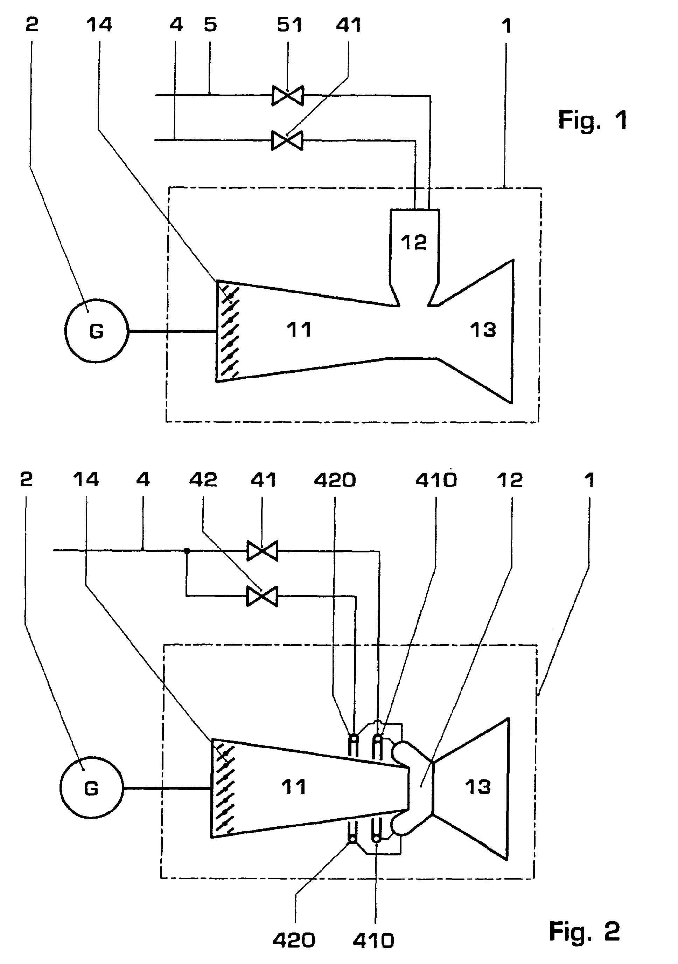

Fig. 1 zeigt schematisch eine Gasturbine 1 zum Antrieb eines Generators 2. Luft wird von einem Verdichter 11 angesaugt und verdichtet. In der Brennkammer 12 wird der verdichteten Luft über die Brennstoffleitung 4 Brennstoff zugeführt und dort verbrannt. Gespanntes Heissgas wird in der Turbine 13 unter Arbeitsabgabe entspannt. Die Gasturbine ist mit einer verstellbaren Vorleitreihe 14 ausgestattet, die die Zuströmbedingungen zum Verdichter und damit die angesaugte Luftmenge bestimmt. Zur Leistungsregelung der Gasturbine wird über das Brennstoff-Regelorgan 41 die zugeführte Brennstoffmenge geregelt. Zur Reduzierung der thermischen Stickoxidbildung in der Brennkammer 12 ist eine Leitung 5 vorgesehen, über die eine von einem Regelorgan 51 einzustellende Menge eines inerten Mediums, beispielsweise Dampf oder Wasser, in die Verbrennungszone der Brennkammer 12 eingebracht wird.

In Fig. 2 ist eine weitere Ausführungsform einer Gasturbine mit Massnahmen zur Reduzierung der thermischen Stickoxidbildung dargestellt. Diese Gasturbine unterscheidet sich von der in Fig. 1 dargestellten insbesondere im Aufbau der Brennkammer 12 und der Brennstoffversorgung. Die Brennkammer 12 ist als Ringbrennkammer ausgeführt, die mit mehreren Vormischbrennern ausgestattet ist. Die Vormischbrenner sind in zwei Gruppen unterteilt, die von zwei Ringleitungen 410 und 420 mit Brennstoff versorgt werden. Die Ringleitungen sind mit einer gemeinsamen Brennstoffleitung 4 verbunden. In der Zuleitung zu jeder der Ringleitungen 410 und 420 ist ein eigenes Brennstoffregelorgan 41, 42 vorgesehen, über welche Regelorgane 41 und 42 die Aufteilung der Brennstoffmenge auf die beiden Brennergruppen verändert werden kann.

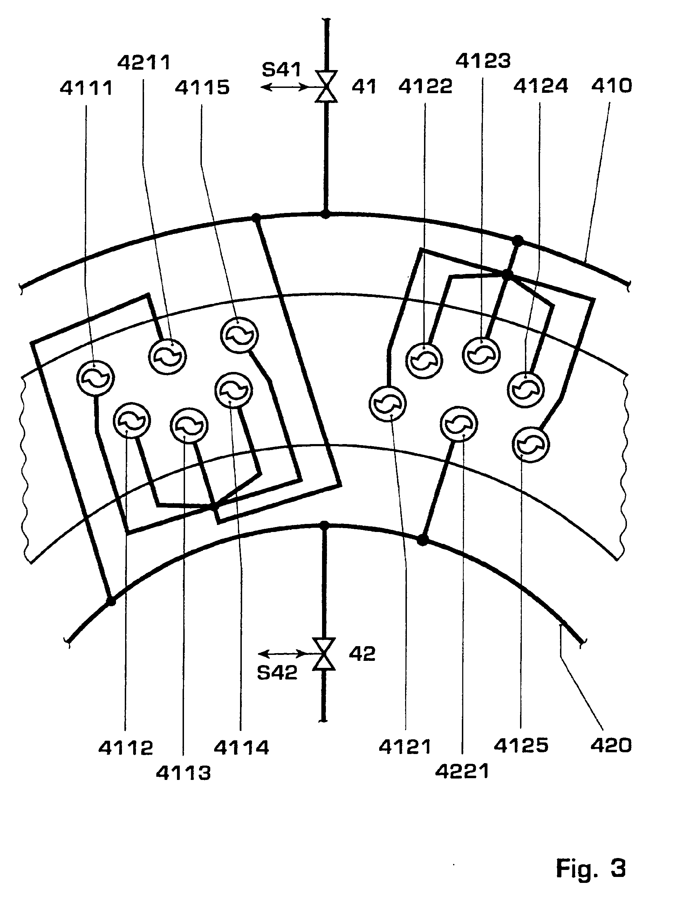

In Fig. 3 ist ein Umfangssegment der Stirnseite einer ringförmigen Brennkammer aus Fig. 2 mit mehreren Vormischbrennern 4111- 4115, 4121 - 4125, 4211 sowie 4221 dargestellt. Mit der Brennstoffversorgung sind die Vormischbrenner in die Gruppen 41xx und 42xx zusammengefasst, die jeweils eine unabhängig voneinander zu steuernde Brennstoffversorgung aufweisen. So sind alle Brenner 41xx an eine Ringleitung 410 angeschlossen, die über das Stellorgan 41 mit der Hauptbrennstoffversorgung verbunden ist. Analog sind alle Brenner 42xx mit der Ringleitung 420 verbunden, welche Ringleitung über ein Regelorgan 42 mit Brennstoff versorgt wird. Eine solche Konfiguration ist von den Vormischbrennern der Gasturbine ABB GT13E2 bekannt. Bei einer solchen Gasturbine wird bei sehr kleiner Maschinenstöchiometrie Brennstoff über eine Anzahl von nicht dargestellten Diffusionsbrennern verbrannt, um eine stabile Verbrennung zu erreichen. Mit steigender Last wird die Öffnung S41 des Stellorgans 41 vergrössert, und die Brenner 41xx können sehr mager, das heisst mit kalten, für sich genommen noch nicht stabilen Vormischflammen, betrieben werden, da die Verbrennung durch die Diffusionsbrenner gestützt wird. Wenn die Leistung hinreichend hoch ist, um mit der zugeführten Brennstoffmenge stabile Vormischflammen auf allen Brennern 41xx zu erreichen, wird die Brennstoffversorgung der Diffusionsbrenner abgeschaltet, und der gesamte thermische Leistungsumsatz wird von den Vormischbrennern 41xx übernommen. Von diesem Punkt an kann die dargestellte Brenneranordnung auf zwei Arten betrieben werden. So könnte einerseits das Stellorgan 41 die Lastregelung übernehmen, und die Öffnung S42 des Stellorgans 42 in Abhängigkeit von einem Steuerungsparameter vorgegeben werden. Andererseits könnten die Brennstoffversorgungsleitungen an einem nicht dargestellten gemeinsamen Hauptregelventil angeschlossen sein, das die Leistungsregelung übernimmt, während den Stellorgane 41, 42 abhängig von dem Steuerungsparameter ein bestimmtes Öffnungsverhältnis S42/S41 vorgegeben wird. Bei der Ausführung der Erfindung wird nachfolgend von der erstgenannten Betriebsart ausgegangen; dem Fachmann eröffnet sich daraus die Realisierung der Erfindung für die zweite Betriebsart ohne weiteres. Auf diese Weise werden über einen weiten Bereich der Maschinenstöchiometrie die Stöchiometrieverhältnisse der Brenner in einem Bereich gehalten, in dem eine stabile Flamme bei geringer Stickoxidbildung gewährleistet wird. Selbstverständlich kann prinzipiell auch hier ein inertes Medium zur weiteren Reduzierung der thermischen Stickoxidbildung eingebracht werden.

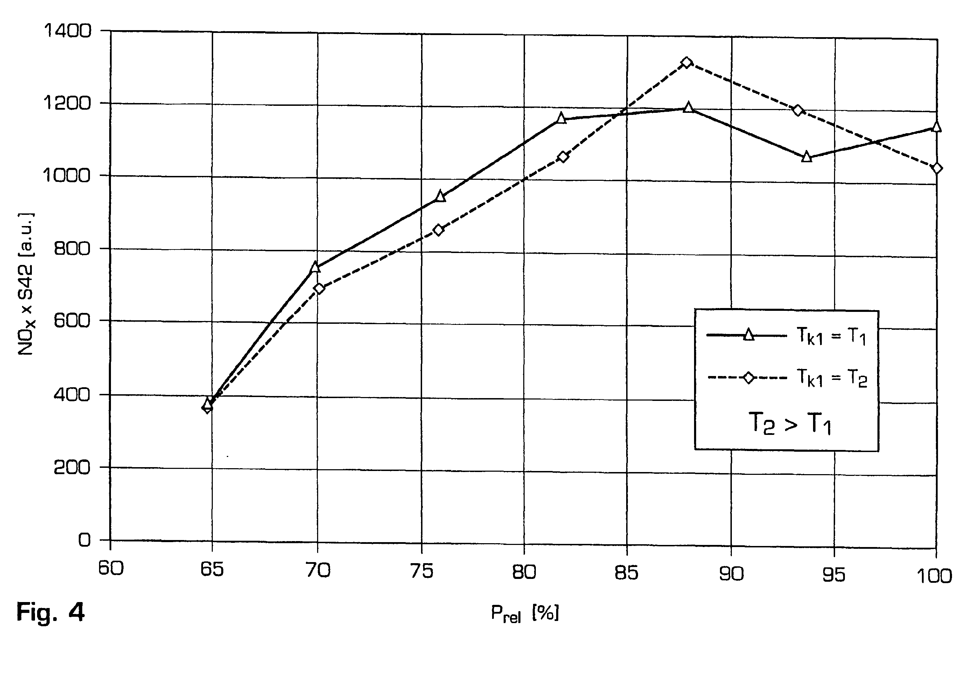

In Fig. 4 sind Messwerte der Stickoxidemissionen einer real ausgeführten Gasturbine vom Typ ABB GT 13E2 über der relativen Gasturbinenleistung aufgetragen. Diese Emissionen sinken, wie erwähnt, mit sinkender Flammentemperatur an den Brennern 41xx, also bei ansonsten gleichen Randbedingungen mit einer steigenden Öffnung S42 des Stellorgans 42. Um eine bessere Vergleichbarkeit der Emissionen zu gewährleisten, wurden die Emissionen multiplikativ mit der Öffnung S42 des Stellorgans 42 gewichtet, und in vertikaler Richtung auf dem Diagramm aufgetragen. Die dargestellten Einheiten sind willkürlich gewählt, da die Grösse S42 in beliebigen Einheiten angegeben werden kann. Die dargestellten Zahlenwerte der gewichteten Emissionen sind daher als Absolutwerte von geringer Aussagekraft, gewährleisten jedoch eine hervorragende Vergleichbarkeit der Messwerte untereinander, da die Emissionen eine Korrektur für unterschiedliche Werte von S42 erfahren haben. Auf der horizontalen Achse ist die relative Gasturbinenleistung aufgetragen.

Weiterhin sind die Ergebnisse zweier Messreihen aufgetragen, die bei unterschiedlichen Verdichtereintrittstemperaturen aufgenommen wurden. Die Unterschiede fallen sofort ins Auge. In einem Lastbereich bis etwa 85% relativer Gasturbinenlast sind die Emissionen bei niedriger Umgebungstemperatur höher als bei der höheren Umgebungstemperatur. hingegen kehrt sich dieses Verhalten zwischen 85% Last und Vollast um. Dieses Phänomen ist auf die Regelung der Vorleitreihenstellung des Verdichters zurückzuführen, welche den Volumenstrom - und damit bei gegebenen Umgebungsbedingungen den Massenstrom - der Luft im Gasturbinenprozess in erster Linie bestimmt. Aufgabe der wohlbekannten Vorleitreihenregelung ist es nämlich, einerseits die Abgastemperatur auf eine bestimmte, beispielsweise für einen Abhitzedampferzeuger günstige Temperatur zu regeln. Andererseits muss die Verbrennungstemperatur durch eine Steigerung der Luftmenge auf einen oberen Grenzwert limitiert werden. Im unteren Leistungsbereich, in dem die Abgastemperatur geregelt wird, bedeutet eine höhere Umgebungstemperatur daher eine grössere Luftmenge, damit eine magerere Verbrennung, und schliesslich geringere Stickoxidemissionen bei hohen Aussentemperaturen. Andererseits aber bedeutet eine niedrigere Umgebungstemperatur bei identischer Relativleistung eine grössere Absolutleistung, damit ein grösseres Druckgefälle über die Turbine, und damit bei identischer Abgastemperatur eine höhere Heissgastemperatur. Daher ist der Punkt, an dem die Vorleitreihe grosse Luftmengen zur Begrenzung der Heissgastemperatur in die Maschine leiten muss, früher erreicht, und bei gleicher Relativlast ist die Vorleitreihe in diesem Regelungszustand weiter geöffnet, woraus ein magereres Gemisch, wiederum erkennbar an niedrigeren Stickoxidemissionen, bei niedrigen Aussentemperaturen resultiert.

Aus dem Diagramm in Fig. 4 lässt sich damit der Schluss ziehen, dass, wenn S42 nach der Relativlast gesteuert wird, bei unterschiedlichen Umgebungsbedingungen Verbrennungsbedingungen, wie sie durch die Stickoxidemissionen ausgedrückt werden, variieren. Bei den bis anhin gebräuchlichen Emissionsgrenzwerten und der zitierten modernen Vormischbrennertechnologie war es aber möglich, die Fahrkonzepte der Brenner immer so einzustellen, dass einerseits ein hinreichender Abstand zur Löschgrenze, andererseits aber auch die Einhaltung der Emissionsgrenzwerte gewährleistet ist. Dieser zur Verfügung stehende Korridor wird allerdings aufgrund der Anforderungen an die Energieversorgung von morgen immer schmaler. Wenn auch durch eine konsequente Weiterentwicklung der Brenner der Bereich einer stabilen Verbrennung erweitert wird, so ist es dennoch wünschenswert, andere Konzepte zur Steuerung der Verbrennungsparameter zur Verfügung zu haben, welche weniger sensibel auf Veränderungen der Umgebungsbedingungen reagieren. Wie oben schon mehrfach erwähnt, gelten die hier gemachten Feststellungen in analoger Weise auch für andere Massnahmen, die zur Minderung der thermischen Stickoxidbildung den Verbrennungsprozess beeinflussen und Temperaturspitzen zu vermindern suchen, wie beispielsweise die Einspritzung von Wasser und/oder Dampf in die Flamme respektive die Flammen in einer Gasturbinenbrennkammer.

Gleichwohl kann die Luftmenge der Gasturbine, zumindest deren relative Veränderung mit der Vorleitreihenstellung und den Umgebungsbedingungen, gut beschrieben werden, so, dass die Luftmenge als Absolutwert, oder auch als Relativwert zu einem Bezugspunkt, als Grösse in die Steuerung der Regelorganöffnung S42 herangezogen werden kann. Hingegen gestaltet sich die Bestimmung der thermischen Leistung komplizierter, da beispielsweise die Genauigkeit der Brennstoffmengenmessung von einer Vielzahl von Einflussgrössen abhängt. Weiterhin werden durch eine Brennstoffmengenmessung Änderungen der Brennstoffzusammensetzung und damit des Heizwertes nicht erfasst. Hingegen steht die Klemmenleistung $P_{act}$ eines von der Gasturbine angetriebenen Generators mit hoher Genauigkeit und Zuverlässigkeit zur Verfügung. Erfindungsgemäss wird diese mit einem Term korrigiert, der insbesondere den durch

$$\eta = 1 - \Pi^{\frac{1-\kappa}{\kappa}}$$

gegebenen thermischen Wirkungsgrad des idealen offenen Gasturbinenprozesses berücksichtigt, wobei in dieser Gleichung n das Druckverhältnis des Gasturbinenprozesses und K das Verhältnis der spezifischen Wärmen des Arbeitsmediums darstellt.

Erfindungsgemäss sind daher in einem nächsten Schritt die in Fig. 4 dargestellten gewichteten Stickoxidemissionen anstatt über der relativen Gasturbinenleistung über einer Grösse darzustellen, die nachfolgend SPRR ("Specific Power Release Rate", spezifische Leistungsfreisetzungsrate) genannt wird. SPRR wird in der Art

$$SPRR = \frac{P_{act}}{m_{Luft}} \bigg/ (1 - \Pi^A)$$

berechnet, wobei $P_{act}$ die Wellenleistung der Gasturbine, im einfachsten Falle durch die Klemmenleistung des Generators wiedergegeben, darstellt, $m_{Luft}$ ist der Luftmassenstrom, der bei gegebener Vorleitreihenstellung und Umgebungsbedingungen in den Verdichter einströmt, $\Pi$ ist das Verhältnis von Brennkammerdruck zu Umgebungsdruck, und A ein teilempirisch zu ermittelnder Exponent.

Zur Ermittlung des Exponenten A werden gewichtete Emissionswerte bei verschiedenen Wellenleistungen der Gasturbine für wenigstens zwei unterschiedliche Umgebungstemperaturen gemessen. Zunächst wird die Annahme getroffen, dass A=(1-κ)/κ sei, was im bei der Bestimmung des SPRR einer schlichten Umrechnung der Wellenleistung in einen thermischen Leistungsumsatz unter der Annahme eines idealen offenen Wirkungsgrades entspricht. Die Praxis zeigt jedoch, dass sich mit dem Brennkammerdruck - und dem Luftmassenstrom! - auch die Komponentenwirkungsgrade dramatisch ändern. Ein weiterer wichtiger Punkt ist die Variation der Verdichterendtemperatur und damit der Verbrennungslufttemperatur, die ebenfalls einen Einfluss auf den möglichen sicheren Betriebsbereich der Brenner und die Stickoxidbildung hat. Der Exponent A wird iterativ so lange verändert, bis die bei unterschiedlichen Temperaturen gemessenen gewichteten Emissionen bei einer Auftragung über der Kenngrösses SPRR möglichst gut übereinstimmen.

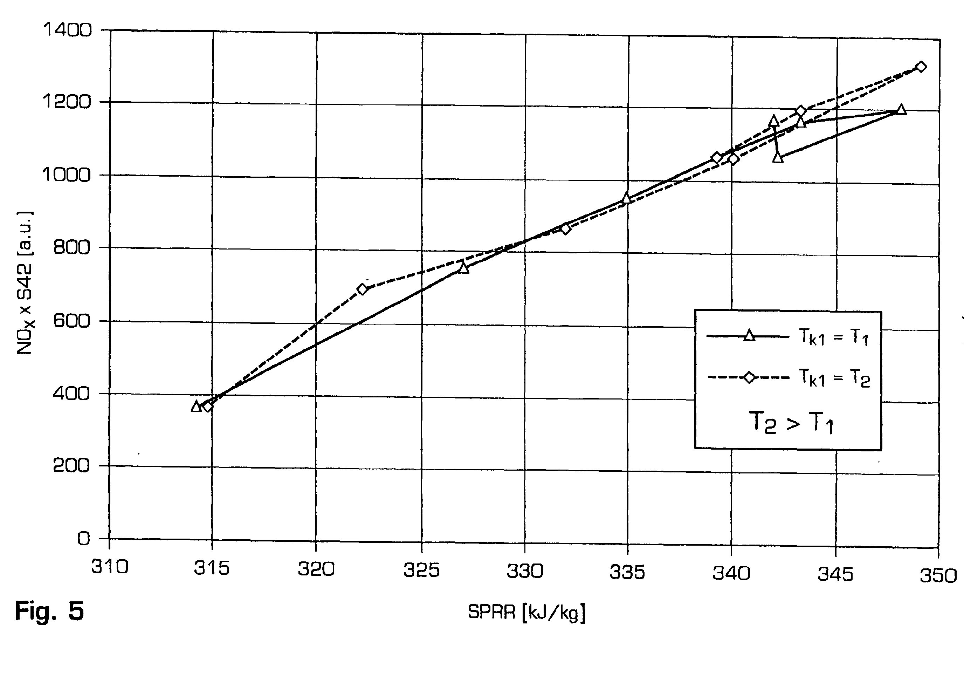

Im hier gezeigten Beispiel führte tatsächlich A=1 zu einem guten Ergebnis. Im Diagramm in Fig. 5 sind die gewichteten Stickoxidemissionen, die in Fig. 4 in Abhängigkeit von der Relativleistung der Gasturbine dargestellt sind, über der Grösse SPRR aufgetragen, wobei bei der Bildung von SPRR A=1 gewählt wurde.

Bei der Implementation der Erfindung sind also in einem ersten Schritt bevorzugt Messreihen bei zwei unterschiedlichen Umgebungstemperaturen zu absolvieren. Bei Kombianlagen, die eine Vorrichtung zur Vorwärmung der Ansaugluft oder ein dampfbeheiztes Anti-Icing System im Ansaugtrakt aufweisen, kann dies selbstverständlich besonders einfach durchgeführt werden, indem ein Testlauf mit und ein Testlauf ohne Vorwärmung der Ansaugluft durchgeführt wird. Sodann werden die während dieser Testläufe bestimmten gewichteten Stickoxidemissionen über SPRR aufgetragen, und der Exponent A wird in Folge variiert, um eine möglichst gute Übereinstimmung zwischen den Werten der beiden Testläufe zu erreichen. In einem weiteren Lauf kann sodann eine für die angestrebten Emissionswerte angepasste Öffnung S42 des Regelorgans 42 auf die an sich bekannte Weise in Abhängigkeit von der Grösse SPRR bestimmt werden. Da S42 nunmehr aber nicht in Abhängigkeit von der Relativlast gesteuert wird, sondern in Abhängigkeit von SPRR, werden Änderungen der Luftmenge, wie sie beispielsweise durch die Vorleitreihe verursacht werden, berücksichtigt. Daher hängen die Stickoxidemissionen nicht mehr in dem dargestellten Ausmasse von Umgebungsbedingungen ab. Dies bedeutet wiederum, dass bei der Einstellung der Verbrennung ein geringerer Abstand zur Löschgrenze einzuhalten ist, als bislang zur Sicherstellung der erforderlichen Betriebssicherheit notwendig.

Es sei ergänzend noch die Gewichtung der Stickoxidemissionen in groben Zügen beschrieben. Je nach der Methode, die zur Verminderung der Stickoxidemissionen verwendet wird, kann bei fester Gasturbinenleistung eine Parametervariation durchgeführt werden. So kann bei der im Ausführungsbeispiel dargestellten Regelung die Öffnung des Stellorgans 42 variiert werden. Bei einem anderen Konzept wird beispielsweise das Verhältnis der Stellorganöffnungen S42/S41 variiert, bei einer Einzelbrennersteuerung die Anzahl der im Betrieb befindlichen Brenner, oder bei Wasser- oder Dampfeinspritzung das Verhältnis der eingespritzten Wasser- oder Dampfmenge zur Brennstoffmenge. Diese Aufzählung erhebt natürlich keinen Anspruch auf Vollzähligkeit, und soll nicht den Umfang des beanspruchten Schutzes einschränken. Es ergibt sich sodann ein eindeutiger funktionaler Zusammenhang zwischen den gemessenen Stickoxidemissionen und dem variierten Parameter. Aus diesem funktionalen Zusammenhang kann eine Normierungs- beziehungsweise Gewichtungsfaktor bestimmt werden, so, dass es möglich ist, eine Kombination aus den gemessenen Stickoxidemissionen und dem Wert des variierten Parameters zu bilden, der eben keine Funktion dieses Parameters ist.

Für den Fachmann ergibt sich aus dem Ausführungsbeispiel in naheliegender Weise das Vorgehen beispielsweise zur Festlegung der Brennerschaltpunkte bei einer Gasturbine mit Einzelbrennersteuerung. Ebenso wird dem Fachmann auch ohne weiteres die Lehre vermittelt, das erfindungsgemässe Verfahren zur Steuerung einer Wassermenge oder Dampfmenge einzusetzen, die zur Stickoxidminimierung in die Brennkammer einer Gasturbine eingespritzt wird.

**Bezugszeichenliste**

| 1 | Gasturbine |
|---|---|
| 2 | Generator |
| 4 | Brennstoffleitung |
| 5 | Leitung zur Zufuhr eines inerten Mediums |
| 11 | Verdichter |
| 12 | Brennkammer |
| 13 | Turbine |
| 14 | verstellbare Vorleitreihe |
| 41 | Brennstoff-Regelorgan |
| 42 | Brennstoff-Regelorgan |
| 51 | Regelorgan für das inerte Medium |
| 410 | Brennstoffleitung, die über das Regelorgan 41 angespeist wird |
| 420 | Brennstoffleitung, die über das Regelorgan 42 angespeist wird |
| 41xx | Gruppe von Vormischbrennern, die von der Leitung 410 angeschlossen sind |
| 42xx | Gruppe von Vormischbrennern, die von der Leitung 420 angeschlossen sind |

**Patentansprüche**

1. Verfahren zur Steuerung von Primärmassnahmen zur Reduktion der thermischen Stickoxidbildung in Gasturbinen, wobei die Primärmassnahmen nach einer Kenngrösse gesteuert werden, welche Kenngrösse eine luftmengenspezifische Wärmefreisetzungsrate in einer Brennkammer einer Gasturbine charakterisiert, wobei zur näherungsweisen Bestimmung der Wärmefreisetzungsrate die an einem abtriebsseitigen Ende einer Nutzleistungswelle der Gasturbine zu Verfügung stehende Leistung herangezogen wird, und die Luftmenge in Abhängigkeit von Umgebungsbedingungen und Maschinen-Betriebsdaten bestimmt wird, **dadurch gekennzeichnet, dass** zur Bestimmung der Wärmefreisetzungsrate die Nutzleistung über einen Term korrigiert wird, der den Brennkammerdruck berücksichtigt.

2. Verfahren nach Anspruch 1, wobei die Gasturbine zur Reduktion der thermischen Stickoxidbildung mit Vormischbrennern ausgestattet ist, **dadurch gekennzeichnet, dass** die Verteilung einer Brennstoffmenge auf einzelne Brenner oder Brennergruppen in Abhängigkeit von der Kenngrösse gesteuert wird.

3. Verfahren nach Anspruch 2, **dadurch gekennzeichnet, dass** einzelne Brenner in Abhängigkeit von der Kenngrösse zu- und abgeschaltet werden.

4. Verfahren nach Anspruch 2, wobei die Gasturbine mit einer Gruppe von Pilotbrennern ausgestattet ist, **dadurch gekennzeichnet, dass** die Pilotbrenner in Abhängigkeit von der Kenngrösse zu- und abgeschaltet werden.

5. Verfahren nach Anspruch 2, **dadurch gekennzeichnet, dass** ein Öffnung von Brennstoff-Regelorganen einzelner Brennergruppen in Abhängigkeit von der Kenngrösse gesteuert wird.

6. Verfahren nach Anspruch 1, wobei zur Reduktion der thermischen Stickoxidbildung ein inertes Medium in eine Brennkammer einer Gasturbine eingespritzt wird, **dadurch gekennzeichnet, dass** die Menge des inerten Mediums in Abhängigkeit von der Kenngrösse gesteuert wird.

7. Verfahren nach Anspruch 6, **dadurch gekennzeichnet, dass** das inerte Medium Wasser ist.

8. Verfahren nach Anspruch 6, **dadurch gekennzeichnet, dass** das inerte Medium Dampf ist.

9. Verfahren nach Anspruch 1 wobei die Gasturbine einen Generator antreibt, **dadurch gekennzeichnet, dass** zur Leistungsbestimmung der Gasturbine die elektrische Klemmenleistung des Generators herangezogen wird.

10. Verfahren nach Anspruch 1, wobei die Gasturbine mit einer verstellbaren Vorleitreihe ausgestattet ist, **dadurch gekennzeichnet, dass** zur Bestimmung der Luftmenge die Stellung der Vorleitreihe mit herangezogen wird.

11. Verfahren nach Anspruch 1, **dadurch gekennzeichnet, dass** die Kenngrösse, welche SPRR genannt wird, in der Form

$$SPRR = \frac{P_{act}}{m_{Luft}} \Big/ (1 - \Pi^A)$$

bestimmt wird, in welcher Formel bedeuten

- $P_{act}$ die Wellenleistung der Gasturbine, bevorzugt durch die Klemmenleistung eines von der Gasturbine angetriebenen Generators wiedergegeben
- $m_{Luft}$ den vom Verdichter angesaugten Luftmassenstrom, berechnet in Abhängigkeit von den Umgebungsbedingungen und gegebenenfalls von der Stellung einer verstellbaren Vorleitreihe

• Π das Verhältnis des Brennkammerdrucks zum Umgebungsdruck
• A ein teilempirisch bestimmter Exponent

## Claims

1. Method of controlling primary measures for reducing the formation of thermal nitrogen oxides in gas turbines, the primary measures being controlled according to a characteristic which characterizes an air-quantity-specific heat release rate in a combustion chamber of a gas turbine, it being the case that, in order to approximately determine the heat release rate, the power output available at an output-side end of a useful-power shaft of the gas turbine is used, and the air quantity is determined as a function of ambient conditions and machine operating data, **characterized in that**, to determine the heat release rate, the useful power is corrected via a term which takes into account the combustion-chamber pressure.

2. Method according to Claim 1, the gas turbine being equipped with premix burners for reducing the formation of thermal nitrogen oxides, **characterized in that** the distribution of a fuel quantity to individual burners or burner groups is controlled as a function of the characteristic.

3. Method according to Claim 2, **characterized in that** individual burners are started and shut down as a function of the characteristic.

4. Method according to Claim 2, the gas turbine being equipped with a group of pilot burners, **characterized in that** the pilot burners are started and shut down as a function of the characteristic.

5. Method according to Claim 2, **characterized in that** an opening of fuel-control members of individual burner groups is controlled as a function of the characteristic.

6. Method according to Claim 1, an inert medium being injected into a combustion chamber of a gas turbine in order to reduce the formation of thermal nitrogen oxides, **characterized in that** the quantity of the inert medium is controlled as a function of the characteristic.

7. Method according to Claim 6, **characterized in that** the inert medium is water.

8. Method according to Claim 6, **characterized in that** the inert medium is steam.

9. Method according to Claim 1, the gas turbine driving a generator, **characterized in that** the electric terminal power output of the generator is used to determine the power output of the gas turbine.

10. Method according to Claim 1, the gas turbine being equipped with an adjustable preliminary guide row, **characterized in that** the position of the preliminary guide row is also used to determine the air quantity.

11. Method according to Claim 1, **characterized in that** the characteristic, which is called SPRR, is determined in the form

$$\mathrm{SPRR} \ = \ \frac{P_{\mathrm{act}}}{m_{\mathrm{air}}} \bigg/ (1 - \Pi^{A})$$

in which formula

• $P_{\mathrm{act}}$ is the shaft power output of the gas turbine, preferably reproduced by the terminal power output of a generator driven by the gas turbine
• $m_{\mathrm{air}}$ is the air mass flow drawn in by the compressor, calculated as a function of the ambient conditions and if need be of the position of an adjustable preliminary guide row
• Π is the ratio of the combustion-chamber pressure to the ambient pressure
• A is an exponent determined partly empirically.

## Revendications

1. Procédé de commande de dispositions primaires en vue de la réduction de la formation thermique d'oxydes d'azote dans les turbines à gaz, les dispositions primaires étant commandées en fonction d'une grandeur caractéristique, laquelle grandeur caractéristique caractérisant un débit, spécifique au débit d'air, de dégagement de chaleur dans une chambre de combustion d'une turbine à gaz, la puissance disponible à l'extrémité entraînée d'un arbre de puissance utile de la turbine à gaz étant utilisée pour déterminer approximativement le débit de dégagement de chaleur et le débit d'air étant déterminé en fonction des conditions ambiantes et de données de fonctionnement de la machine, **caractérisé en ce que** pour déterminer le taux de dégagement de chaleur, la puissance utile est corrigée par un terme qui tient compte de la pression dans la chambre de combustion.

2. Procédé selon la revendication 1, dans lequel la turbine à gaz est dotée de brûleurs à prémélange en vue de réduire la formation thermique d'oxydes d'azote, **caractérisé en ce que** la répartition du débit de combustible entre différents brûleurs ou grou-

**EP 1 085 267 B1**

pes de brûleurs est commandée en fonction de la grandeur caractéristique.

3. Procédé selon la revendication 2, **caractérisé en ce que** différents brûleurs sont branchés et débranchés en fonction de la grandeur caractéristique.

4. Procédé selon la revendication 2, dans lequel la turbine à gaz est équipée d'un groupe de brûleurs pilotes, **caractérisé en ce que** les brûleurs pilotes sont branchés et débranchés en fonction de la grandeur caractéristique.

5. Procédé selon la revendication 2, **caractérisé en ce que** l'ouverture d'organes de régulation de combustible de différents groupes de brûleurs est commandée en fonction de la grandeur caractéristique.

6. Procédé selon la revendication 1, dans lequel, pour réduire la formation thermique d'oxydes d'azote, un fluide inerte est injecté dans une chambre de combustion d'une turbine à gaz, **caractérisé en ce que** le débit de fluide inerte est commandé en fonction de la grandeur caractéristique.

7. Procédé selon la revendication 6, **caractérisé en ce que** le fluide inerte est l'eau.

8. Procédé selon la revendication 6, **caractérisé en ce que** le fluide inerte est la vapeur d'eau.

9. Procédé selon la revendication 1, dans lequel la turbine à gaz entraîne un générateur, et **caractérisé en ce que** pour déterminer la puissance de la puissance à gaz, on utilise la puissance électrique délivrée aux bornes du générateur.

10. Procédé selon la revendication 1, dans lequel la turbine à gaz est dotée d'une rangée ajustable de préguidage, **caractérisé en ce que** pour déterminer le débit d'air, on tient compte de la position de la rangée double de pré-guidage.

11. Procédé selon la revendication 1, **caractérisé en ce que** la grandeur caractéristique appelée SPRR est définie sous la forme

$$SPRR = \frac{P_{act}}{m_{Luft}} \Big/ (1 - \Pi^A)$$

dans laquelle

- $P_{act}$ représente la puissance à l'arbre de la turbine à gaz, donnée de préférence par la puissance aux bornes d'un générateur entraîné par la turbine à gaz,
- $m_{Luft}$ représente le débit massique d'air aspiré par le compresseur, calculé en fonction des conditions ambiantes et éventuellement de la position d'une rangée d'aubes de pré-guidage ajustables,
- $\Pi$ représente le rapport entre la pression de la chambre de combustion et la pression ambiante et
- A représente un exposant déterminé en partie empiriquement.

Fig. 1

Fig. 2

Fig. 3

Fig. 4

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0321809 A
- EP 509496 A